# EUROPEAN PATENT SPECIFICATION

(11) **EP 2 888 204 B1**
(45) Date of publication and mention of the grant of the patent: **31.01.2018**
(21) Application number: 13745518.4
(22) Date of filing: 22.07.2013
(51) Int. Cl.: C02F 1/20, C02F 1/44, B01D 61/02, B01D 61/14, C02F 103/08, B01D 65/02

(54) **SYSTEM AND METHOD TO REDUCE THE FOULING OF A CATALYTIC SEAWATER DEOXYGENATION UNIT**
SYSTEM UND VERFAHREN ZUR REDUZIERUNG DER FAULUNG EINER KATALYTISCHEN MEERWASSERDESOXYDIERUNGSEINHEIT
SYSTÈME ET PROCÉDÉ POUR RÉDUIRE L'ENCRASSEMENT D'UNE UNITÉ DE DÉSOXYGÉNATION CATALYTIQUE D'EAU DE MER

(30) Priority: 22.08.2012 US 201213591822
(43) Date of publication of application: 01.07.2015
(73) Proprietor: Cameron International Corporation, Houston, TX 77027 (US)
(72) Inventor: SPRENKEL, Marcus, D., Houston, TX 77077 (US); WESTON, Robert Charles William, Maidenhead Berkshire SL6 1XH (GB); MELLOR, Gary Howard, Reading Berkshire RG5 3DG (GB)
(74) Representative: Schlumberger Cambridge Research Limited
(86) International application number: PCT/US2013/051493
(87) International publication number: WO 2014/031268

(56) References cited:
- WO-A1-2007/144591
- WO-A1-2007/147198
- WO-A2-2010/122336
- JP-A- H06 134 490
- JP-A- 2002 136 994
- US-A- 4 527 626
- US-A- 5 725 781
- Preston Sloane ET AL: "Catalytic Hydrogen Deoxygenation and Triple Membrane Demineralization at North Anna Nuclear Station", , 8 March 2010 (2010-03-08), XP055080565, Retrieved from the Internet: URL:https://knowledgecentral.gewater.com/k cpguest/salesedge/documents/Technical%20Pa pers_Cust/Americas/English/TP1070EN.pdf [retrieved on 2013-09-23]
- Gran, H.G. et al.: "A Weight- and Space-Saving Seawater Injection System Design", SPE Production Engineering, vol. 5, no. 1 1 February 1990 (1990-02-01), pages 83-84, XP002713439, Retrieved from the Internet: URL:http://www.onepetro.org/mslib/servlet/ onepetropreview?id=00015883 [retrieved on 2013-09-23]

## Description

### Background

This invention relates to systems and processes to reduce the fouling of a catalytic seawater deoxygenation unit. In particular, this invention relates to systems and processes using nanofiltration membrane systems in order to remove the dissolved inorganic salts and organic constituents that cause fouling from seawater before deoxygenation occurs.

Catalyst bed-based seawater deoxygenation units remove dissolved oxygen from seawater by reacting it with hydrogen. This reaction occurs on the open areas of the catalyst bed. However, certain dissolved inorganic salts within seawater can foul the catalyst bed by precipitating from solution and forming deposits on the bed. These deposits, known as scale, reduce the amount of open area on the bed where deoxygenation reactions can occur. Some of the organic constituents in seawater may also collect on the catalyst, further reducing the reactive area of the bed. As a result, the treatment capacity of the deoxygenation unit is decreased, the catalytic deoxygenation system must be taken off-line more frequently for cleaning, and catalyst lifetime is reduced.

Neither multi-media filtration nor cartridge filters are capable of removing all of the constituents that cause fouling from seawater. The typical way to remove fouling is to take the system off-line and wash the catalyst with one or more chemical cleaning agents. Citric acid is typically used for scale, while sodium hypochlorite may be used to control organic constituents. However, using sodium hypochlorite also results in the production of chlorine which, like oxygen, reacts with the hydrogen that is fed into the deoxygenation unit. As a result, more hydrogen and greater catalyst volumes are required to achieve the same level of oxygen removal. Other chemical cleaning agents, such as sodium hydroxide or biocides, may also be used to remove organic constituents from the catalyst. However, using any chemical cleaning agent increases chemical consumption, operational costs, and system downtime. Other issues may arise with chemical handling, storage, and disposal, particularly in off-shore operations. In addition, because the agents cannot always remove all of the scale and organic constituents, the catalyst may not be fully regenerated. The amount of fouling on the catalyst also increases over time. In order to offset the catalyst lost to fouling, catalytic deoxygenation systems may be designed to have more catalyst than necessary for the quantity and quality of water to be treated. Alternatively, the catalyst may be replaced more frequently. Both options result in operational challenges, decreased treatment efficiency, and increased cost.

Thus, a need exists for systems and processes that can remove the major components of inorganic and organic fouling from seawater before it enters a deoxygenation unit. These systems and processes will substantially eliminate scale and organic fouling of the catalyst, resulting in longer run times and more reliable operation for deoxygenation units. Other advantages include increased catalyst lifetime, reduced catalyst volume along with corresponding reductions in treatment vessel size and cost, and reduced consumption of chemical cleaning agents.

Preston Sloane ET AL: "Catalytic Hydrogen Deoxygeneration and Triple Membrane Demineralization at North Anna Nuclear Station", GE Power & Water. Water & Process Technologies; JP H06 134490 A; and JP 2002 136994 A, each disclose filtration systems to reduce fouling in an catalytic bed-based deoygeneration unit.

According to a first aspect of the invention there is provided a catalytic bed-based deoxygenation system comprising: a filtration system having a plurality of selectively permeable nanofiltration membranes, at least one selectively permeable membrane of the plurality arranged to receive a raw seawater feed and produce a first membrane permeate, at least one other selectively permeable membrane of the plurality arranged downstream to receive a reject stream from the at least one selectively permeable membrane and produce a second membrane permeate; and a catalyst bed-based deoxygenation unit arranged to receive the first and the second membrane permeate; and a hydrogen supply arranged such that hydrogen is added to the first and the second membrane permeate before they are received in the catalyst bed-based deoxygenation unit. According to a second aspect of the invention there is provided a process for reducing fouling in a catalytic bed-based deoxygenation unit, the process comprising the steps of: passing a raw seawater feed through a filtration system having a plurality of selectively permeable nanofiltration membranes, characterized by being arranged to receive the raw sweater feed and produce a first membrane permeate, at least one other of the selectively permeable membranes being arranged downstream to receive a reject stream from the at least one selectively permeable membranes and produce a second membrane permeate; and routing the first and second membrane permeate to a catalyst bed-based deoxygenation unit; further comprising the step of adding hydrogen to the first and the second membrane permeate before they enter the catalyst bed-based deoxygenation unit.

### Brief Description of the Drawings

FIG. 1 shows a preferred embodiment of the system for reducing fouling in a catalytic bed-based deoxygenation unit according to this invention. The filtration system in FIG. 1 is a two-stage nanofiltration membrane system.
FIG. 2 shows another embodiment of the system for reducing fouling in a catalytic bed-based deoxygenation unit (not according to the invention The filtration system in FIG. 2 is a single stage reverse osmosis membrane system.
FIG. 3 shows another embodiment of the system for reducing organic fouling of a catalytic bed-based deoxygenation unit (not according to the invention). The filtration system in FIG. 3 is a single stage microfiltration or ultrafiltration membrane system.

### Elements and Element Lumbering Used in the Drawings and the Detailed Description

- 10: Filtration system
- 20: Two-stage nanofiltration membrane system
- 30: Catalyst bed-based deoxygenation unit
- 40: Raw seawater feed
- 50: First stage nanofiltration membrane unit
- 60: First stage nanofiltration membrane unit
- 70: Membrane permeate
- 80: Membrane reject
- 90: Membrane permeate
- 95: Combined membrane permeate stream from first stage
- 98: Combined membrane permeate stream from first and second stages
- 100: Membrane reject
- 105: Combined membrane reject stream
- 110: Second stage nanofiltration membrane unit
- 120: Membrane permeate
- 130: Concentrated membrane reject
- 140: Hydrogen supply
- 150: Combined membrane permeate and hydrogen stream
- 160: Deoxygenated seawater product
- 165: Filtration system
- 170: Single-stage reverse osmosis membrane system
- 180: Reverse osmosis membrane unit
- 190: Reverse osmosis membrane unit
- 200: Membrane permeate
- 210: Membrane reject
- 220: Membrane permeate
- 225: Combined membrane permeate stream
- 230: Membrane reject
- 240: Concentrated membrane reject
- 250: Combined membrane permeate and hydrogen stream
- 255: Filtration system
- 260: Microfiltration or ultrafiltration system
- 265: Membrane permeate
- 270: Static mixer
- 275: Combined membrane permeate and hydrogen stream
- 280: Stream of backwash water
- 285: Backwash water supply
- 290: Backwash overboard discharge
- 295: Stream of compressed air
- 300: Air scour supply

### Detailed Description of the Preferred Embodiments

A system and process made according to this invention removes contaminants, such as dissolved inorganic salts and organic constituents, from a raw seawater feed before it enters a catalytic bed-based deoxygenation unit in order to reduce fouling of the deoxygenation unit. The contaminants are sent to disposal. The system is comprised of nanofiltration membrane systems.

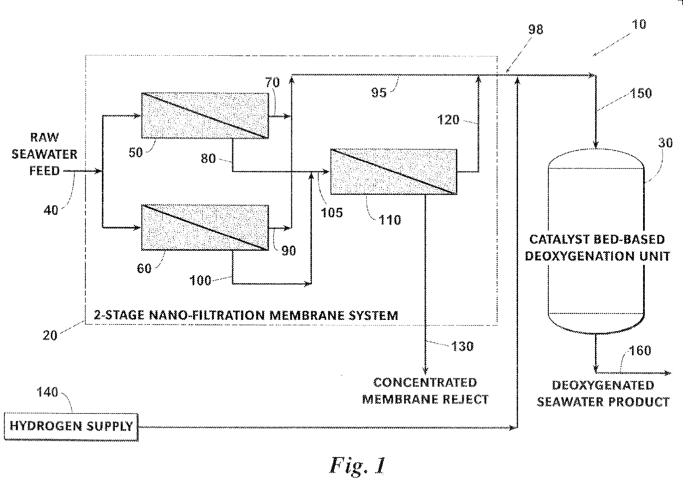

Referring first to FIG. 1, a preferred embodiment of a filtration system 10 includes a two-stage nanofiltration membrane system 20. Raw seawater feed 40 containing dissolved inorganic salts and organic constituents is directed to one of two first-stage nanofiltration membrane units 50, 60. Although two membrane units are shown in FIG. 1, the number of first-stage membrane units may vary with the quantity and quality of raw seawater to be processed, the amount of available space, and other factors. Each first-stage nanofiltration membrane unit 50, 60 contains a plurality of selectively permeable membranes that contact the raw seawater feed. A portion of the raw seawater feed passes through the membranes, forming a membrane permeate 70, 90 that is substantially free of the dissolved inorganic salts which are the major components of scale and the organic constituents responsible for organic fouling. The streams of membrane permeate 70, 90 from the first-stage nanofiltration membrane units 50, 60 are mixed to form a combined membrane permeate stream 95. The remaining raw seawater feed, which contains the dissolved inorganic salts and organic constituents that are too large to pass through the membranes, is concentrated into a stream of membrane reject 80, 100.

The streams of membrane reject 80, 100 from the first-stage nanofiltration membrane units 50, 60 are mixed to form a combined membrane reject stream 105 and routed to the second-stage nanofiltration membrane unit 110. F1G. 1 shows a single second-stage membrane unit. However, the number of membrane units in the second stage may vary with the quantity and quality of raw seawater to be processed, the amount of available space, and other factors. This nanofiltration membrane unit 110 also contains a plurality of selectively permeable membranes. These membranes contact the combined membrane reject stream 105 and allow a portion of it to pass through the membranes, forming a membrane permeate 120 that is substantially free of the dissolved inorganic salts which are the major components of scale and the organic constituents responsible for organic fouling. The remaining raw seawater feed, which contains the dissolved inorganic salts and organic constituents that are too large to pass through the membranes, forms a stream of concentrated membrane reject 130 which may be sent to disposal.

The stream of membrane permeate 120 from the second-stage nanofiltration membrane unit 110 may be mixed with the combined membrane permeate stream 95 from the first-stage nanofiltration membrane units 50, 60 to form a combined membrane permeate stream from the first and second stages 98. The combined membrane permeate stream from the first and second stages 98 is then mixed with hydrogen from a hydrogen supply 140 to form a combined membrane permeate and hydrogen stream 150, which is fed to the catalyst bed-based deoxygenation unit 30. The catalyst bed-based deoxygenation unit 30 removes dissolved oxygen from seawater by reacting it with hydrogen, creating a deoxygenated seawater product 160.

Although FIG. 1 depicts a two-stage system, the number of stages in a filtration membrane system may vary depending upon the characteristics of the raw seawater to be deoxygenated, the amount of available space, the rate at which the raw seawater must be treated, and other factors. In a single-stage system (not part of the invention), the raw seawater feed may enter one filtration membrane unit or multiple filtration membrane units operating in parallel. The streams of membrane permeate from each membrane unit may then be combined, mixed with hydrogen, and fed to the catalyst bed-based deoxygenation unit. The streams of membrane reject from each membrane unit may be combined and sent to disposal. In systems with three or more stages, the membrane permeate from each stage may be routed to the deoxygenation unit, while the membrane reject may be routed to the filtration membrane unit or units at the next stage. At the final stage, the membrane reject may be sent for disposal.

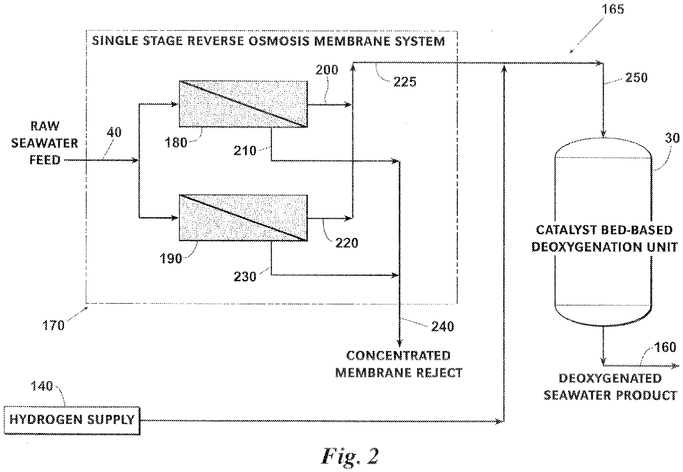

Referring now to FIG. 2, another embodiment of a filtration system 165 (not part of the invention) includes a single-stage reverse osmosis membrane system 170. Raw seawater feed 40 containing dissolved inorganic salts and organic constituents is directed to one of two reverse osmosis membrane units 180, 190. Although two membrane units are shown in FIG. 2, the number of membrane units may vary with the quantity and quality of the raw seawater to be processed, the amount of available space, and other factors. Each reverse osmosis membrane unit 180, 190 contains a plurality of selectively permeable membranes that contact the raw seawater feed. A portion of the raw seawater feed passes through the membranes, forming a membrane permeate 200, 220 that is substantially free of the dissolved inorganic salts which are the major components of scale and the organic constituents responsible for organic fouling. The streams of membrane permeate 200, 220 from the reverse osmosis membrane units 180, 190 are mixed to form a combined membrane permeate stream 225. The combined membrane permeate stream 225 is then mixed with hydrogen from a hydrogen supply 140 to form a combined membrane permeate and hydrogen stream 250, which is fed to the catalyst bed-based deoxygenation unit 30. The catalyst bed-based deoxygenation unit 30 removes dissolved oxygen from seawater by reacting it with hydrogen, creating a deoxygenated seawater product 160.

The remaining seawater feed, which contains the dissolved inorganic salts and organic constituents that are too large to pass through the membranes, is concentrated into a stream of membrane reject 210, 230. The streams of membrane reject 210, 230 from the reverse osmosis membrane units 180, 190 are combined to form a stream of concentrated membrane reject 240 which may be sent to disposal.

Although FIG. 2 depicts a single-stage system, the number of stages in a filtration membrane system may vary depending upon the characteristics of the raw seawater to be deoxygenated, the amount of available space, the rate at which the raw seawater must be treated, and other factors. In a multiple-stage system, the raw seawater feed may enter one filtration membrane unit or multiple filtration membrane units operating in parallel. The streams of membrane permeate from each membrane unit may then be combined, mixed with hydrogen, and fed to the catalyst bed-based deoxygenation unit. The membrane reject from each unit may be combined and routed to the filtration membrane unit or units at the next stage. This process may be repeated until the final stage, which routes the membrane reject for disposal. Another system and process (not according to this invention) may also be designed to remove organic constituents from a raw seawater feed before it enters a catalytic bed-based deoxygenation unit in order to reduce fouling of the deoxygenation unit. The organic constituents are subsequently removed from the filtration system and sent for treatment or disposal. This filtration system may be comprised of a microfiltration system or an ultrafiltration system.

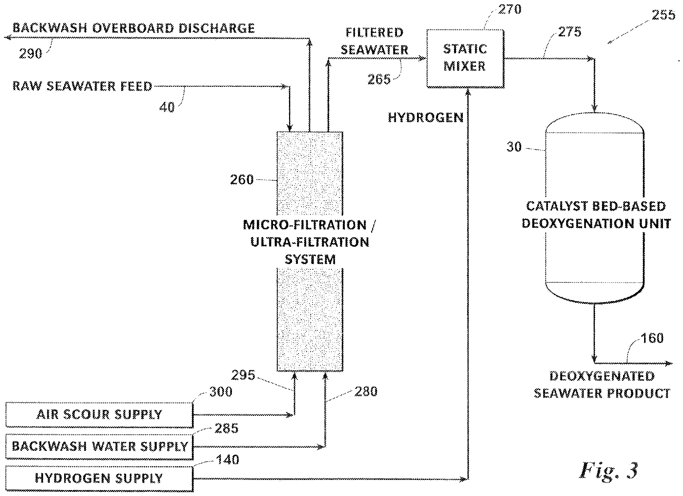

Referring to FIG. 3, a preferred embodiment of such system 255 includes a filtration system 260, which may be either a microfiltration or an ultrafiltration system. Microfiltration or "MF" may remove particulates that are equal to or greater than 0.1 micrometers in size, while ultrafiltration or "UF" may remove particulates that are equal to or greater than 0.01 micrometers in size. Raw seawater feed 40 containing organic constituents is directed to the filtration system 260. Although one filtration system is shown in FIG. 3, the number of filtration systems may vary with the quantity and quality of the raw seawater to be processed, the amount of available space, and other factors. The raw seawater feed 40 passes through the filtration system 260, forming a stream of membrane permeate 265 that is substantially free of the organic constituents which are the major components of organic fouling. A stream of hydrogen from a hydrogen supply 140 is then dispersed through the stream of membrane permeate 265 using a static mixer 270 or similar method. The combined membrane permeate and hydrogen stream 275 is then fed to a catalyst bed-based deoxygenation unit 30. The catalyst bed-based deoxygenation unit 30 removes dissolved oxygen from seawater by reacting it with hydrogen, creating a deoxygenated seawater product 160.

Although FIG. 3 depicts a one-stage system, the number of stages in a microfiltration or ultrafiltration system may vary depending upon the characteristics of the raw seawater to be deoxygenated, the amount of available space, the rate at which the raw seawater must be treated, and other factors. In a multiple-stage system, the raw seawater feed may enter one filtration system or multiple filtration systems operating in parallel. The filtered seawater from the first stage may then be directed to the filtration system or systems at the next stage if additional removal of organic constituents is required. This process may be repeated until the final stage, which routes the filtered seawater to the deoxygenation unit.

The organic constituents may be removed from the microfiltration or ultrafiltration system 260 by backwashing. In backwashing, a stream of backwash water 280 from a backwash water supply 285 is passed quickly through the microfiltration or ultrafiltration system 260 in a direction opposite to the normal direction of flow. The organic constituents trapped in the filtration system 260 are thus removed from the filter media and entrained in the backwash water 280. The backwash water 280 then exits the filtration system 260 through the backwash overboard discharge 290 and may be sent for further treatment or disposal. Air scouring, in which a stream of compressed air 295 from an air scour supply 300 is blown through the filtration system 260 in the same direction as the stream of backwash water 280, may be used before or intermittently with backwashing to aid in the removal of organic constituents.

While preferred embodiments of a system to reduce the inorganic and organic fouling of catalytic seawater deoxygenation units have been described in detail, a person of ordinary skill in the art understands that certain changes can be made in the arrangement of process steps and type of components used in the process without departing from the scope of the attached claims.

## Claims

1. A catalytic bed-based deoxygenation system (10) comprising:
a filtration system (20) having a plurality of selectively permeable nanofiltration membranes (50, 60, 110),
at least one selectively permeable membrane (50, 60) of the plurality arranged to receive a raw seawater feed (40) and produce a first membrane permeate (70, 90), at least one other selectively permeable membrane (110) of the plurality arranged downstream to receive a reject stream (80, 100) from the at least one selectively permeable membrane (50, 60) and produce a second membrane permeate (120); and
a catalyst bed-based deoxygenation unit (30) arranged to receive the first and the second membrane permeate (70, 90, 120); and
a hydrogen supply (140) arranged such that hydrogen is added to the first and the second membrane permeate (70, 90 120) before they are received in the catalyst bed-based deoxygenation unit (30).

2. A process for reducing fouling in a catalytic bed-based deoxygenation unit (30), the process comprising the steps of:
passing a raw seawater feed (40) through a filtration system (20) having a plurality of selectively permeable nanofiltration membranes (50, 60, 110),
**characterized by**
being arranged to receive the raw sweater feed (40) and produce a first membrane permeate (70, 90), at least one other of the selectively permeable membranes (110) being arranged downstream to receive a reject stream (80, 100) from the at least one selectively permeable membranes (50, 60) and produce a second membrane permeate (120); and routing the first and second membrane permeate (70, 90 120) to a catalyst bed-based deoxygenation unit (30);
further comprising the step of adding hydrogen to the first and the second membrane permeate (70,90,120) before they enter the catalyst bed-based deoxygenation unit (30).

## Patentansprüche

1. Katalytisches bettbasiertes Sauerstoffentzugssystem (10), Folgendes umfassend:
ein Filtersystem (20) mit einer Mehrzahl von selektiv durchlässigen Nanofiltrationsmembranen (50, 60, 110),
wenigstens eine selektiv durchlässige Membran (50, 60) aus der Mehrzahl, die angeordnet ist, eine Zufuhr von unbehandeltem Meereswasser (40) aufzunehmen und ein erstes Membranpermeat (70, 90) zu erzeugen,
wenigstens eine weitere selektiv durchlässige Membran (110) aus der Mehrzahl, die stromabwärts angeordnet ist, um einen Abwasserstrom (80, 100) von der wenigstens einen selektiv durchlässigen Membran (50, 60) aufzunehmen und ein zweites Membranpermeat (120) zu erzeugen; und
eine bettbasierte Katalysatorsauerstoffentzugseinheit (30), die angeordnet ist, das erste und das zweite Membranpermeat (70, 90, 120) aufzunehmen; und
eine Wasserstoffversorgung (140), die derart angeordnet ist, dass Wasserstoff dem ersten und dem zweiten Membranpermeat (70, 90, 120) hinzugefügt wird, bevor diese in der bettbasierten Katalysatorsauerstoffentzugseinheit (30) aufgenommen werden.

2. Vorgang zum Verringern von Verschmutzung in einer katalytischen bettbasierten Sauerstoffentzugseinheit (30), wobei der Vorgang die folgenden Schritte umfasst:
Leiten einer Zufuhr von unbehandeltem Meereswasser (40) durch ein Filtersystem (20) mit einer Mehrzahl von selektiv durchlässigen Nanofiltrationsmembranen (50, 60, 110), **dadurch gekennzeichnet, dass**
diese angeordnet sind, die Zufuhr von unbehandeltem Meereswasser (40) aufzunehmen und ein erstes Membranpermeat (70, 90) zu erzeugen,
wobei wenigstens eine andere der selektiv durchlässigen Membranen (110) stromabwärts angeordnet ist, um einen Abwasserstrom (80, 100) von den wenigstens einen selektiv durchlässigen Membranen (50, 60) aufzunehmen und ein zweites Membranpermeat (120) zu erzeugen; und
Weiterleiten des ersten und des zweiten Membranpermeats (70, 90, 120) an eine bettbasierte Katalysatorsauerstoffentzugseinheit (30);
ferner umfassend den Schritt des Hinzufügens von Wasserstoff zu dem ersten und dem zweiten Membranpermeat (70, 90, 120), bevor sie in die bettbasierte Katalysatorsauerstoffentzugseinheit (30) eintreten.

## Revendications

1. Système de désoxygénation basé sur un lit catalytique (10) comprenant :
un système de filtration (20) ayant une pluralité de membranes de nanofiltration sélectivement perméables (50, 60, 110),
au moins une membrane sélectivement perméable (50, 60) de la pluralité disposée pour recevoir une alimentation d'eau de mer brute (40) et produire un premier perméat de membrane (70, 90),
au moins une autre membrane sélectivement perméable (110) de la pluralité disposée en aval pour recevoir un flux de rejet (80, 100) à partir de l'au moins une membrane sélectivement perméable (50, 60) et produire un deuxième perméat de membrane (120) ; et
une unité de désoxygénation basée sur un lit de catalyseur (30) conçue pour recevoir le premier et le deuxième perméats de membrane (70, 90, 120) ; et
une alimentation en hydrogène (140) conçue de sorte que de l'hydrogène soit ajouté au premier et au deuxième perméats de membrane (70, 90, 120) avant qu'ils n'entrent dans l'unité de désoxygénation basée sur un lit de catalyseur (30).

2. Processus pour réduire l'encrassement dans une unité de désoxygénation basée sur un lit catalytique (30), le processus comprenant les étapes suivantes :
passer une alimentation d'eau de mer brute (40) à travers un système de filtration (20) ayant une pluralité de membranes de nanofiltration sélectivement perméables (50, 60, 110),
**caractérisé en ce que**
il est conçu pour recevoir l'alimentation d'eau de mer brute (40) et produire un premier perméat de membrane (70, 90),
au moins une autre membrane parmi les membranes sélectivement perméables (110) est disposée en aval pour recevoir un flux de rejet (80, 100) à partir de l'au moins une membrane sélectivement perméable (50, 60) et produire un deuxième perméat de membrane (120) ; et
acheminer le premier et le deuxième perméats de membrane (70, 90, 120) vers une unité de désoxygénation basée sur un lit de catalyseur (30) ;
comprenant en outre l'étape d'ajout d'hydrogène dans le premier et le deuxième perméats de membrane (70, 90, 120) avant qu'ils n'entrent dans l'unité de désoxygénation basée sur un lit de catalyseur (30).
